# EUROPEAN PATENT SPECIFICATION

(11) **EP 2 213 925 B1**
(45) Date of publication and mention of the grant of the patent: **28.11.2012**
(21) Application number: 09015299.2
(22) Date of filing: 10.12.2009
(51) Int. Cl.: F16L 23/00, F16L 23/032, F16L 47/02, F16L 47/28, F16L 55/115

(54) **Electroweldable fitting made of polyethylene for big-diameter ducts**
Elektroschweissmuffe aus Polyethylen für Leitungen mit einem großen Durchmesser
Fixation électro-soudable fabriquée en polyéthylène pour conduits de gros diamètre

(30) Priority: 30.01.2009 IT TO20090055
(43) Date of publication of application: 04.08.2010
(73) Proprietor: Ravetti, Roberto, 15030 Rosignano Monferrato (AL) (IT)
(72) Inventor: Ravetti, Roberto, 15030 Rosignano Monferrato (AL) (IT)
(74) Representative: Garavelli, Paolo

(56) References cited:
- EP-A2- 1 777 377
- GB-A- 223 335
- GB-A- 2 342 970
- US-A- 3 399 908
- US-A- 5 161 565
- US-A- 5 437 482

## Description

The present invention refers to an electroweldable fitting made of polyethylene, for big-diameter ducts.

It is known to use ducts made of plastic material, in particular polyethylene PE or high density polyethylene PE-HD, for transporting and delivering water, gas or other pressurised fluids.

Such ducts however has the inconvenience that the terminal flange of the duct head or of a possible fitting connected to the head is also made of the same plastic material, consequently resulting scarcely resistant and relatively unreliable, if other fixtures, such as plugs, valves, duct-clogging systems, etc., must be connected or fastened to such flange.

Electroweldable fittings for metallic pipes and ducts are known, for example, from GB-A-223 335, US-A-2 303 311, DE-A1-20 53 147, GB-A-2 342 970, US-A-4 552 386, US-A-5 437 482, US-A-1 593 041, US-A-3 399 908 and EP-A-1 777 377.

US-A-5 437 482 discloses a pipe adapter flange for joining plastic pipes and metallic pipes, according to the preamble of claim 1.

The art however does not propose any electroweldable fitting that can be made integral with a flange of a duct or a fitting made of plastic material, allowing, to or through this latter one, to perform the solid and reliable connection of further fixtures to the flange itself.

Therefore, object of the present invention is solving the above prior art problems, by providing an electroweldable fitting made of polyethylene, that can be made integral with a duct or a fitting made of plastic material, allowing, to or through this latter one, to perform the solid and reliable connection of further fixtures to the flange itself.

Another object of the present invention is providing an electroweldable fitting that can be easily, practically and quickly connected to a flange.

The above and other objects and advantages of the invention, as will appear from the following description, are obtained with an electroweldable fitting for flanges of ducts or fittings made of plastic material as claimed in claim 1. Preferred embodiments and non-trivial variations of the present invention are the subject matter of the dependent claims.

It will be immediately obvious that numerous variations and modifications (for example related to shape, sizes, arrangements and parts with equivalent functionality) can be made to what is described, without departing from the scope of the invention as appears from the enclosed claims.

The present invention will be better described by some preferred embodiments thereof, provided as a non-limiting example, with reference to the enclosed drawings, in which:

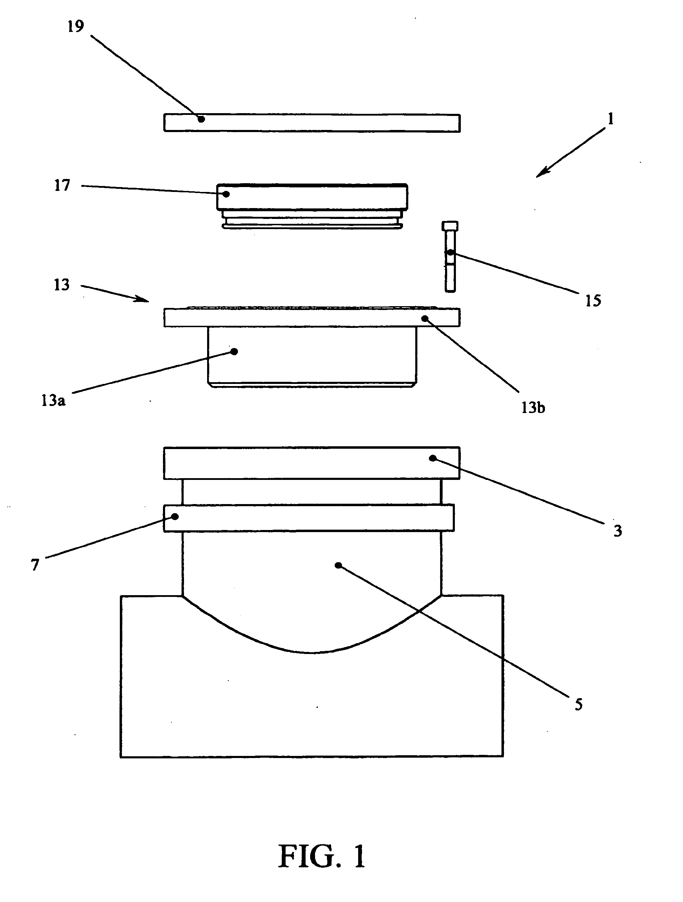

- Figure 1 shows an exploded side view of the electroweldable fitting for flanges of ducts or fittings made of plastic material according to the present invention;

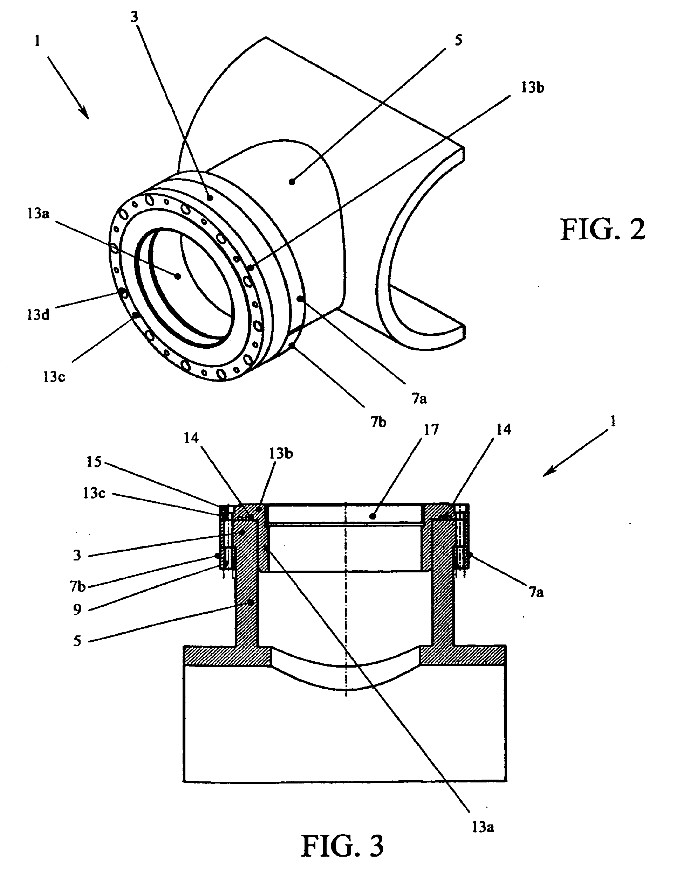

- Figure 2 shows a perspective view of the electroweldable fitting according to the present invention connected to a flange of a fitting; and
- Figure 3 shows a sectional view of the fitting of FIG. 2 equipped with the electroweldable fitting according to the present invention.

With reference to the Figures, it is possible to note that the electroweldable fitting 1 according to the present invention, comprising a flange 3 of a fitting 5 or of a duct head made of plastic material, such as for example polyethylene PE or high density polyethylene PE-HD, further comprises:
- at least one base composite ring 7, preferably composed of two semi-annular components 7a, 7b to be composed and arranged around the tubular part of the duct upstream of the flange 3, such base composite ring 7 being equipped with a plurality of through-holes 9, possibly internally threaded, arranged on the ring perimeter and coinciding with corresponding through-holes 11 pre-existing on the perimeter of the flange 3 or suitably obtained for laying the electroweldable fitting 1 according to the present invention, for example by means of a drill;
- at least one closing ring-nut 13 mechanically cooperating with the base composite ring 7 to be made integral therewith downstream of the flange 3: the closing ring-nut 13 is composed of at least one tubular portion 13a having an external diameter suitable to be inserted inside the opening of the duct corresponding to the flange 3, such tubular portion 13a being integral with at least one external crown 13b equipped with fastening means to the base composite ring 7.

According to the invention, such fastening means are made as a plurality of through-holes 13c arranged on the perimeter around the external crown 13b and brought to correspond with the through-holes 9 of the base composite ring 7 and the through-holes 11 of the flange 3. Preferably, closing ring-nut 13 and base composite ring 7 are made integral preferably through at least one screw 15 passing through at least one through-hole 13c of the external crown 13b, through a corresponding through-hole 11 of the flange 3 and engaging the internal threading of the through-holes 9 of the base composite ring 7; alternatively, closing ring-nut 13 and base composite ring 7 can be made integral through at least one bolt (not shown) passing through at least one through-hole 13c of the external crown 13b, through a corresponding through-hole 11 of the flange 3 and at least one through-hole 9 of the base composite ring 7 to be mechanically fastened with a related nut. The closing ring-nut 13, and in particular the external crown 13b, could further be equipped with further fastening means, for example made as a second plurality of holes 13d arranged on the perimeter and possibly internally threaded, suitable to allow the connection or fastening of other known fixtures, such as plugs, valves, duct-clogging systems, etc. Therefore, in order to increase the reliability of the connection or the fastening of such fixtures to the fitting 5, in order to increase the reliability and resistance provided only by the plastic material composing the flange 3, at least the base composite ring 7 and the closing ring-nut 13 are made of a suitable metallic material. In order to guarantee the necessary seal to the pressurised fluids passing inside the duct, the external crown 13b of the closing ring-nut 13 can be equipped with at least one gasket, preferably made as at least one O-Ring inserted in a suitable recess 14 that, owing to the compression due to the tightening of the screw 15 to make the closing ring-nut 13 integral with the base composite ring 7, gets to squash against the flange 3, preventing fluid from blowing-by. In addition, the electroweldable fitting 1 according to the present invention could comprise at least one internal plug 17 to be inserted inside the tubular portion 13a of the closing ring-nut 13, possibly abutting against a suitable shoulder obtained on the circumference inside the tubular portion 13a.

As further addition, the electroweldable fitting 1 according to the present invention could comprise at least one closing cap 19 to be fastened to the fastening means of the closing ring-nut 13, and in particular to the second plurality of holes 13d through suitable screws, in order to plug the opening of the flange 3 reinforced with the electroweldable fitting 1 according to the present invention.

## Claims

1. Electroweldable fitting (1) made of plastic material comprising a flange (3) of a fitting (5) or of a duct head, made of plastic material, such plastic material being in particular polyethylene PE or high density polyethylene PE-HD, the flange (3) being surrounded by and made integral with:
- at least one base composite ring (7) made of metallic material and arranged around a tubular part upstream of said flange (3); and
- at least one closing ring-nut (13) made of metallic material and mechanically cooperating with said base composite ring (7) in order to be made integral with said base composite ring (7) downstream of said flange (3), **characterised in that** said closing ring-nut (13) being composed of a tubular portion (13a) suitable to be inserted inside an opening of a duct corresponding to said flange (3), said tubular portion (13a) being integral with at least one external crown (13b) equipped with fastening means to said base composite ring (7); wherein
said base composite ring (7) is equipped with a plurality of through-holes (9) arranged on its perimeter and coinciding with corresponding through-holes (11) of said flange (3), and **in that** said fastening means are a plurality of through-holes (13c) arranged on the perimeter of said external crown (13b) corresponding with said through-holes (9) of said base composite ring (7) and said through-holes (11) of said flange (3).

2. Electroweldable fitting (1) according to claim 1, **characterised in that** said base composite ring (7) is composed of two semi-annular components (7a, 7b).

3. Electroweldable fitting (1) according to claim 1, **characterised in that** said closing ring-nut (13) and said base composite ring (7) are made integral through at least one screw (15) or bolt passing through at least one of said through-holes (13c) of said external crown (13b), through a corresponding one of said through-holes (11) of said flange (3) and one of said through-holes (9) of said base composite ring (7).

4. Electroweldable fitting (1) according to any one of the previous claims, **characterised in that** said closing ring-nut (13) is equipped with fastening means to other fixtures such as plugs, valves, duct-clogging systems.

5. Electroweldable fitting (1) according to claim 4, **characterised in that** said fastening means to other fixtures are a second plurality of holes (13d) arranged on the perimeter of said external crown (13b).

6. Electroweldable fitting (1) according to claim 1, **characterised in that** it comprises at least one internal plug (17) to be inserted inside said tubular portion (13a) of said closing ring-nut (13).

7. Electroweldable fitting (1) according to claim 4, **characterised in that** it comprises at least one closing cap (19) to be fastened to said fastening means to other fixtures of said closing ring-nut (13).

## Patentansprüche

1. Elektrisch verschweißbarer Anschluss (1), bestehend aus Plastikmaterial, einschließlich einem Flansch (3) auf einem Anschluss (5) oder einem Leitungsende, bestehend aus Plastikmaterial, wobei dieses Plastikmaterial im Einzelnen Polyäthylen PE oder PE-HD (Polyäthylen mit hoher Dichte) ist und der Flansch (3) mit folgendem umringt und verbunden ist:
- mit wenigstens einem zusammensetzbaren Grundring (7), bestehend aus Metall, der um den rohrförmigen Teil vor dem besagten Flansch (3) herum läuft; und
- mit wenigstens einer Verschlusszwinge (13), bestehend aus Metall, die mechanisch mit dem besagten, zusammensetzbaren Grundring (7) kooperiert und sich mit dem besagten, zusammensetzbaren Grundring (7) nach dem besagten Flansch (3) vereinigt, **gekennzeichnet durch** die Tatsache, dass die besagte Verschlusszwinge (13) aus einem rohrförmigen Teil (13a) besteht, der sich innen in eine Öffnung einer Leitung nahe des besagten Flansches (3) einfügt, dieser rohrförmige Teil (13a) ist mit wenigstens einem Außenkranz (13b) verbunden, der mit Befestigungsmitteln für den besagten, zusammensetzbaren Grundring (7) ausgerüstet ist,
wobei der besagte, zusammensetzbare Grundring (7) mit mehreren durchgehenden Löchern (9) versehen ist, die auf dem Umfang angeordnet sind und mit den betreffenden durchgehenden Löchern (11) des besagten Flansches (3) übereinstimmen; sowie **durch** die Tatsache, dass die besagten Befestigungsmittel aus mehreren durchgehenden Löchern (13c) bestehen, die auf dem Umfang des besagten Außenkranzes (13b) angeordnet sind und mit den besagten, durchgehenden Löchern (9) des besagten zusammensetzbaren Grundrings (7) und den besagten durchgehenden Löchern (11) des besagten Flansches (3) übereinstimmen.

2. Elektrisch verschweißbarer Anschluss (1) gemäß Patentanspruch 1, **gekennzeichnet durch** die Tatsache, dass der besagte, zusammensetzbare Grundring (7) aus zwei Halbringen (7a, 7b) besteht.

3. Elektrisch verschweißbarer Anschluss (1) gemäß Patentanspruch 1, **gekennzeichnet durch** die Tatsache, dass die besagte Verbindung zwischen der besagten Verschlusszwinge (13) und dem besagten, zusammensetzbaren Grundring (7) **durch** wenigstens eine Schraube (15) oder einen Bolzen **durch** wenigstens eines der besagten durchgehenden Löcher (13c) des besagten Außenkranzes (13b) erfolgt, **durch** ein entsprechendes, durchgehendes Loch (11) des besagten Flansches (3) und einem der besagten, durchgehenden Löcher (9) des besagten, zusammensetzbaren Grundrings (7).

4. Elektrisch verschweißbarer Anschluss (1) gemäß einem jeglichen der vorherigen Patentansprüche, **gekennzeichnet durch** die Tatsache, dass die besagte Verschlusszwinge (13) mit Befestigungsmitteln und anderen Ausrüstungen wie Stopfen, Ventilen, Verstopfsystemen der Leitung versehen ist.

5. Elektrisch verschweißbarer Anschluss (1) gemäß Patentanspruch 4, **gekennzeichnet durch** die Tatsache, dass die besagten Befestigungsmittel und anderen Ausrüstungen aus einer zweiten Mehrzahl von Löchern (13d) bestehen, die auf dem Umfang des besagten Außenkranzes (13b) angeordnet sind.

6. Elektrisch verschweißbarer Anschluss (1) gemäß Patentanspruch 1, **gekennzeichnet durch** die Tatsache, dass er mindestens einen Innenstopfen (17) umschließt, der innen in den besagten rohrförmigen Teil (13a) der besagten Verschlusszwinge (13) eingeführt wird.

7. Elektrisch verschweißbarer Anschluss (1) gemäß Patentanspruch 4, **gekennzeichnet durch** die Tatsache, dass er zumindest eine Verschlusskappe (19) einschließt, die auf die besagten Befestigungsmittel der besagten Verschlusszwinge (13) aufgesetzt wird.

## Revendications

1. Raccord électro-soudable (1) composé de matériel plastique comprenant une bride (3) d'un raccord (5) ou d'une tête de conduit, faite de matériel plastique, ce matériel plastique étant en polyéthylène PE particulier ou en polyéthylène à haute densité PE-HD, la bride (3) étant entourée par et rendu solidaire avec :
- au moins un anneau composable de base (7) fait de matériel métallique et disposé autour d'une partie tubulaire en amont de ladite bride (3) ; et
- au moins un anneau de fermeture (13) composé de matériel métallique et coopérant mécaniquement avec ledit anneau composable de base (7) pour se solidariser avec ledit anneau composable de base (7) en aval de ladite bride (3), **caractérisé par le fait que** ledit anneau de fermeture (13) est composé d'une portion tubulaire (13a) apte à s'insérer à l'intérieur d'une ouverture d'un conduit correspondant à ladite bride (3), ladite portion tubulaire (13a) étant solidaire à au moins une couronne externe (13b) dotée de moyens de fixation avec ledit anneau composable de base (7), dans laquelle
ledit anneau composable de base (7) est doté d'une pluralité de trous passants (9) disposés sur le périmètre et coïncidant avec des trous passants correspondants (11) de ladite bride (3), et **par le fait que** lesdits moyens de fixation sont une pluralité de trous passants (13c) disposés sur le périmètre de ladite couronne externe (13b) correspondant avec lesdits trous passants (9) dudit anneau composable de base (7) et desdits trous passants (11) de ladite bride (3).

2. Raccord électro-soudable (1) selon la revendication 1, **caractérisé par le fait que** ledit anneau composable de base (7) est composé de deux composants semi-annulaires (7a, 7b).

3. Raccord électro-soudable (1) selon la revendication 1, **caractérisé par le fait que** ladite solidarisation entre ledit anneau de fermeture (13) et ledit anneau composable de base (7) s'effectue au moyen d'au moins une vis (15) ou un boulon passant à travers au moins un trou passant (13c) de ladite couronne externe (13b), à travers un trou passant correspondant (11) de ladite bride (3) et un desdits trous passants (9) dudit anneau composable de base (7).

4. Raccord électro-soudable (1) selon une quelconque des revendications précédentes, **caractérisé par le fait que** ledit anneau de fermeture (13) est doté de moyens de fixation à d'autres outillages tels que bouchons, vannes, systèmes d'obturation du conduit.

5. Raccord électro-soudable (1) selon la revendication 4, **caractérisé par le fait que** lesdits moyens de fixation à d'autres outillages sont une seconde série de trous (13d) disposés sur le périmètre de ladite couronne externe (13b).

6. Raccord électro-soudable (1) selon la revendication 1, **caractérisé par** le fait de comprendre au moins un bouchon interne (17) à insérer à l'intérieur de ladite portion tubulaire (13a) dudit anneau de fermeture (13).

7. Raccord électro-soudable (1) selon la revendication 4, **caractérisé par** le fait de comprendre au moins une calotte de fermeture (19) à fixer aux dits moyens de fixation dudit anneau de fermeture (13).
